# EUROPÄISCHE PATENTANMELDUNG

(11) **EP 4 545 503 A1**
(43) Veröffentlichungstag der Anmeldung: **30.04.2025**
(21) Anmeldenummer: 24199206.4
(22) Anmeldetag: 09.09.2024
(51) Int. Cl.: C04B 28/04, C04B 28/06, C04B 40/06, C04B 111/00, C04B 111/60, C04B 111/72

(54) **TROCKENMÖRTELZUSAMMENSETZUNGEN FÜR KLEBER UND PUTZE**

(30) Priorität: 23.10.2023 DE 102023004258
(71) Anmelder: STO SE & Co. KGaA, 79780 Stühlingen (DE)
(72) Erfinder: Sadrina, Frank, 79780 Stühlingen (DE); Braunger, Simon, 70780 Stühlingen (DE); Holzer, Michael, 78315 Radolfzell (DE)
(74) Vertreter: Gottschalk, Matthias

(57) **Zusammenfassung**

Die vorliegende Erfindung betrifft ein Trockenmörtelgemisch, umfassend: mindestens ein mineralisches Bindemittel, und eine Füllstoffkombination mit einer mindestens trimodalen Partikelgrößenverteilung, umfassend mindestens einen Grobfüllstoff (GFS) mit einen Medianwert der Partikelgröße D₅₀, bestimmt gemäß DIN ISO 9276-1:2004-09 und ISO 9276-2:2014-05, von 501 µm bis 2000 µm, mindestens einen Mittelfüllstoff (MFS) mit einen Medianwert der Partikelgröße D₅₀ von 78 µm bis 500 µm, und mindestens einen Feinfüllstoff (FFS) mit einen Medianwert der Partikelgröße D₅₀ von 10 µm bis 77 µm, wobei das Trockenmörtelgemisch weiterhin kohlehaltiges Granulat (KG) mit einen Medianwert der Partikelgröße D₅₀ von 501 µm bis 2000 µm umfasst. Die vorliegende Erfindung betrifft ferner die Verwendung des Trockenmörtelgemisches in Putzen, Klebe- und Armierungsmörteln, Fliesenklebern, Fugenmörteln, Betoninstandsetzungsprodukten oder Bodenbeschichtungen.

## Beschreibung

Die vorliegende Erfindung betrifft ein Trockenmörtelgemisch, umfassend: mindestens ein mineralisches Bindemittel, und eine Füllstoffkombination mit einer mindestens trimodalen Partikelgrößenverteilung, umfassend mindestens einen Grobfüllstoff (GFS) mit einen Medianwert der Partikelgröße D₅₀, bestimmt gemäß DIN ISO 9276-1:2004-09 und ISO 9276-2:2014-05, von 501 µm bis 2000 µm, mindestens einen Mittelfüllstoff (MFS) mit einen Medianwert der Partikelgröße D₅₀ von 78 µm bis 500 µm, und mindestens einen Feinfüllstoff (FFS) mit einen Medianwert der Partikelgröße D₅₀ von 10 µm bis 77 µm, wobei das Trockenmörtelgemisch weiterhin kohlehaltiges Granulat (KG) mit einen Medianwert der Partikelgröße D₅₀ von 501 µm bis 2000 µm umfasst. Die vorliegende Erfindung betrifft ferner die Verwendung des Trockenmörtelgemisches in Putzen, Klebe- und Armierungsmörteln, Fliesenklebern, Fugenmörteln, Betoninstandsetzungsprodukten oder Bodenbeschichtungen.

### Hintergrund der Erfindung

Feuchtigkeit stellt bei Bauwerken, wie beispielsweise Wohngebäuden, ein Problem dar, sowohl in Innerräumen als auch im Außenbereich. In Innenräumen kann es durch unzureichendes Feuchtigkeitsmanagement beispielsweise zu Schimmelbildung kommen. Im Außenbereich können durch feuchte Baumaterialien eventuell Frostschäden entstehen bzw. gefördert werden. Gewünscht sind Baumaterialien, die gasförmiges Wasser (Wasserdampf) aufnehmen und gegebenenfalls speichern (und wieder abgeben) können aber darüber hinaus flüssiges Wasser nicht oder nur wenig aufnehmen, d.h. eine möglichst geringe kapillare Wasseraufnahme zeigen. Dabei ist zu beachten, dass eine einer gute Wasserdampfsorption und gleichzeitig eine möglichst niedrige kapillare Wasseraufnahme eigentlich entgegenstehende technische Ziele sind.

EP 2 393 590 betrifft ein Stoffgemisch mit feuchtespeichernden Eigenschaften, ein Verfahren zur Herstellung des Stoffgemisches und die Verwendung des Stoffgemisches für feuchtespeichernde Platten für den Bausektor und zur Herstellung von feuchtespeichernden Platten. Das Stoffgemisch und die daraus herstellbaren feuchtigkeitsspeichernden Platten bestehen aus Wasserglas, insbesondere Kaliwasserglas, als Bindemittel sowie einer Aktivkohle-Hauptkomponente und Füllstoffen, insbesondere Bims, pyrogener Kieselsäure und Blähtonsand.

Die diesbezügliche Leistungsfähigkeit von aus dem Stand der Technik bekannten Baumaterialien und Zusammensetzungen zur Herstellung von Baumaterialien ist jedoch nicht ausreichend hoch. Es werden verbesserte Zusammensetzungen benötigt, die Baumaterialien, wie z.B. Putze, Klebe- und Armierungsmörtel, Fliesenkleber, Fugenmörtel, Betoninstandsetzungsprodukte oder Bodenbeschichtungen, mit guter Wasserdampfaufnahme und möglichst geringer kapillarer Wasseraufnahme ergeben. Diese Zusammensetzungen für Baumaterialien sollen ferner einen guten Frost-Tausalzwiderstand zeigen. Dabei soll jedoch die Farbe bzw. Färbbarkeit dieser Baumaterialien nicht beeinträchtigt sein (beispielsweise durch eine zu hohe Dunkelfärbung der Ausgangsmaterialien). Wünschenswert ist auch, dass die Zusammensetzungen für Baumaterialien eine gute CO₂-Bilanz aufweisen.

### Zusammenfassung der Erfindung

Die vorliegende Erfindung betrifft ein Trockenmörtelgemisch, umfassend:
mindestens ein mineralisches Bindemittel, und
eine Füllstoffkombination mit einer mindestens trimodalen Partikelgrößenverteilung, umfassend
   mindestens einen Grobfüllstoff (GFS) mit einen Medianwert der Partikelgröße D₅₀, bestimmt gemäß DIN ISO 9276-1:2004-09 und ISO 9276-2:2014-05, von 501 µm bis 2000 µm,
   mindestens einen Mittelfüllstoff (MFS) mit einen Medianwert der Partikelgröße D₅₀ von 78 µm bis 500 µm, und
   mindestens einen Feinfüllstoff (FFS) mit einen Medianwert der Partikelgröße D₅₀ von 10 µm bis 77 µm, und
wobei das Trockenmörtelgemisch weiterhin kohlehaltiges Granulat (KG) mit einen Medianwert der Partikelgröße D₅₀ von 501 µm bis 2000 µm umfasst.

Ferner betrifft die Erfindung die Verwendung des Trockenmörtelgemisches in Putzen, Klebe- und Armierungsmörteln, Fliesenklebern, Fugenmörteln, Betoninstandsetzungsprodukten oder Bodenbeschichtungen.

Weitere Ausführungsformen der vorliegenden Erfindung sind in der folgenden detaillierten Beschreibung und den angefügten Ansprüchen ausgeführt.

### Detaillierte Beschreibung der Erfindung

Wie vorstehend ausgeführt betrifft die vorliegende Erfindung ein Trockenmörtelgemisch, umfassend: mindestens ein mineralisches Bindemittel, und eine Füllstoffkombination mit einer mindestens trimodalen Partikelgrößenverteilung, umfassend mindestens einen Grobfüllstoff (GFS) mit einen Medianwert der Partikelgröße D₅₀, bestimmt gemäß DIN ISO 9276-1:2004-09 und ISO 9276-2:2014-05, von 501 µm bis 2000 µm, mindestens einen Mittelfüllstoff (MFS) mit einen Medianwert der Partikelgröße D₅₀ von 78 µm bis 500 µm, und mindestens einen Feinfüllstoff (FFS) mit einen Medianwert der Partikelgröße D₅₀ von 10 µm bis 77 µm, wobei das Trockenmörtelgemisch weiterhin kohlehaltiges Granulat (KG) mit einen Medianwert der Partikelgröße D₅₀ von 501 µm bis 2000 µm umfasst. Die vorliegende Erfindung betrifft ferner die Verwendung des Trockenmörtelgemisches in Putzen, Klebe- und Armierungsmörteln, Fliesenklebern, Fugenmörteln, Betoninstandsetzungsprodukten oder Bodenbeschichtungen.
Gemäß der vorliegenden Erfindung enthält das Trockenmörtelgemisch, eine Füllstoffkombination mit einer mindestens trimodalen Partikelgrößenverteilung. Die Füllstoffkombination mit einer mindestens trimodalen Partikelgrößenverteilung umfasst gemäß der vorliegenden Erfindung
mindestens einen Grobfüllstoff (GFS) mit einen Medianwert der Partikelgröße D₅₀ von 501 µm bis 2000 µm,
mindestens einen Mittelfüllstoff (MFS) mit einen Medianwert der Partikelgröße D50 von 78 µm bis 500 µm, und
mindestens einen Feinfüllstoff (FFS) mit einen Medianwert der Partikelgröße D50 von 10 µm bis 77 µm.

Der D₅₀-Wert, der auch Halbwertskorngröße oder Medianwert genannt wird, und gemäß der vorliegenden Erfindung als *"Medianwert der Partikelgröße D₅₀*" bezeichnet wird, gibt die mittlere Partikelgröße eines teilchenförmigen Feststoffs an, so dass der Anteil der Partikel, die größer als der D₅₀-Wert sind, gleich dem Anteil der Partikel ist, die kleiner als der D₅₀-Wert sind. Die Bestimmung dieser Werte erfolgt erfindungsgemäß bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/-durchmessern und Momenten aus Partikelgrößenverteilungen). Dabei kann der Mastersizer 3000 der Firma Malvern Instruments Limited als Instrument zur Größenbestimmung eingesetzt werden. In der Regel können diese Werte aber auch einfach einem technischen Datenblatt entnommen werden.

### Füllstoffkombination

Die erfindungsgemäße Füllstoffkombination mit mindestens trimodaler Partikelgrößenverteilung mit den vorstehend angegebenen Medianwerten der Partikelgrößen D₅₀ ermöglicht eine besonders dichte Packung der Füllstoffe, da sich die Mittelfüllstoffe in die verbleibenden Räume zwischen den Grobfüllstoffen und die Feinfüllstoffe in die verbleibenden Räume zwischen den Grobfüllstoffen und den Mittelfüllstoffen setzen. Je dichter die Packung ist, desto besser wird eine *"innere Struktur"* erreicht, die eine niedrige kapillare Wasseraufnahme und einen guten Frost-Tausalzwiderstand bewirkt, da weniger Raum zur Verfügung steht, der beispielsweise mit mineralischem Bindemittel oder mit Wasser gefüllt werden kann. Je weniger Wasser in einer auf dem erfindungsgemäßen Trockenmörtelgemisch basierenden Mörtelmasse enthalten ist, desto weniger Wasser muss beim Trocknen einer aus der Mörtelmasse hergestellten Schicht verdunsten. Im Ergebnis kann so auch die Trocknung beschleunigt werden.

Zur Festlegung der Medianwerte der Partikelgrößen D₅₀ der Füllstoffkombination mit mindestens trimodaler Partikelgrößenverteilung enthaltenen Füllstoffe kann vom Medianwert der Partikelgröße D₅₀ der Fraktion der Grobfüllstoffe (GFS) ausgegangen werden. Die Grobfüllstoffe (GFS) bilden innerhalb der Packung eine Art Grundgerüst aus. In diesem Grundgerüst verbleiben zwischen den Grobfüllstoffen Räume, deren Größe sich berechnen bzw. abschätzen lässt, so dass hiernach die Größe der Mittelfüllstoffe (MFS) festlegbar ist. Dies gilt analog für die Räume, die zwischen den Grob- und den Mittelfüllstoffen verbleiben und mit Feinfüllstoffen (FFS) gefüllt werden sollen.

Bei der Berechnung der verbleibenden Räume zwischen den Füllstoffen können die Partikel einer Größenfraktion vereinfacht bzw. modellhaft als Kugeln gleicher Größe betrachtet werden, wobei die Größe dem jeweiligen Medianwert der Partikelgröße D₅₀ entspricht. In der Realität weicht die Form der Partikel von der Kugelform ab. Zudem haben nicht alle Füllstoffe einer Größenfraktion die gleiche Größe, sondern liegen ebenfalls in einer Größenverteilung vor. All dies kann jedoch bei der Berechnung der verbleibenden Räume bzw. bei der Bestimmung des Medianwert der Partikelgröße D₅₀ der einzelnen Größenfraktionen vernachlässigt werden.

In einer möglichst dichten Kugelpackung bilden sich Tetraederlücken und Oktaederlücken aus. In eine Oktaederlücke zwischen Partikeln/Kugeln eines Grobfüllstoffs mit dem Durchmesser D passt eine kleinere Kugel mit einem Durchmesser d, wenn d im Bereich 0,155*D und 0,414*D liegt. Maßgebender sind jedoch die Tetraederlücken. In eine Tetraederlücke zwischen Partikeln/Kugeln eines Grobfüllstoffs mit dem Durchmesser D passt eine kleinere Kugel mit einem Durchmesser d, wenn d im Bereich 0,225*D und 0,291 *D liegt.

Verallgemeinernd lässt sich sagen, dass der Medianwert der Partikelgröße D₅₀ des Mittelfüllstoffs (MFS) zwischen 0,155 und 0,414, vorzugsweise zwischen 0,225 und 0,414, weiterhin vorzugsweise zwischen 0,225 und 0,291, des Medianwerts der Partikelgröße D₅₀ des Grobfüllstoffs (GFS) liegen sollte, um eine möglichst dichte Packung zu erhalten. Demgemäß betrifft die vorliegende Erfindung in einer Ausführungsform ein Trockenmörtelgemisch wie vorstehend beschrieben, umfassend eine Füllstoffkombination mit einer mindestens trimodalen Partikelgrößenverteilung, wobei der Medianwert der Partikelgröße D₅₀ des Mittelfüllstoffs (MFS) vorzugsweise 0,155 bis 0,414 des Medianwerts der Partikelgröße D₅₀ des Grobfüllstoffs (GFS) beträgt, und wobei stärker bevorzugt der Medianwert der Partikelgröße D₅₀ des Mittelfüllstoffs (MFS) 0,225 bis 0,414, noch stärker bevorzugt 0,225 bis 0,291 des Medianwerts der Partikelgröße D₅₀ des Grobfüllstoffs (GFS) beträgt. Ebenso betrifft die vorliegende Erfindung in einer weiteren Ausführungsform ein Trockenmörtelgemisch wie vorstehend beschrieben, umfassend eine Füllstoffkombination mit einer mindestens trimodalen Partikelgrößenverteilung, wobei der Medianwert der Partikelgröße D₅₀ des Feinfüllstoffs (FFS) vorzugsweise 0,5 oder weniger des Medianwerts der Partikelgröße D₅₀ des Mittelfüllstoffs (MFS) beträgt, und wobei stärker bevorzugt der Medianwert der Partikelgröße D₅₀ des Feinfüllstoffs (FFS) 0,33 oder weniger, noch stärker bevorzugt 0,25 oder weniger des Medianwerts der Partikelgröße D₅₀ des Mittelfüllstoffs (MFS) beträgt.

Des Weiteren weisen in einer weiteren Ausführungsform die Medianwerte der Partikelgrößen D₅₀ der einzelnen Füllstofffraktionen, und zwar Feinfüllstoff (FFS): Mittelfüllstoff (MFS) : Grobfüllstoff (GFS), ein Verhältnis von 1 : 3-10 : 15-40 auf. Dadurch wird begünstigt, dass der Feinfüllstoff die zwischen dem Grobfüllstoff und dem Mittelfüllstoff verbleibenden Lücken bzw. Räume füllt.

Die Füllstoffe der Füllstoffkombination werden erfindungsgemäß im allgemeinen ausgewählt silikatischen, karbonatischen, oxidischen, hydroxidischen und/oder sulfatischen Füllstoffen, wie beispielsweise Quarz, Cristobalit, Kalkstein, Marmor, Dolomit, Aluminiumhydroxid und/oder Bariumsulfate. Kalkhydrat und Sulfatträger werden gemäß der vorliegenden Erfindung nicht zu den Füllstoffen gerechnet. Die Füllstoffkombination aus Grobfüllstoff (GFS), Mittelfüllstoff (MFS) und Feinfüllstoff (FFS) liegt gemäß der Erfindung im erfindungsgemäßen Trockenmörtelgemisch in einer Menge von 20-85 Gew.%, vorzugsweise 25-80 Gew.%, stärker bevorzugt 30-75 Gew.%, bezogen auf das Gesamtgewicht des Trockenmörtelgemisches, vor.

Als Grobfüllstoff (GFS) werden erfindungsgemäß vorzugsweise silikatische und/oder carbonatische Füllstoffe verwendet. Illustrative Bespiele davon beinhalten Quarz, Cristobalit, Kalkstein, Marmor und/oder Dolomit. Bevorzugt werden als Grobfüllstoff (GFS) CaCOs (Kalkstein, Marmor) und/oder Quarz. Der Mengenanteil des Grobfüllstoffs (GFS) am erfindungsgemäßen Trockenmörtelgemisch beträgt typischerweise 5,0-60 Gew.%, vorzugsweise 7,5-50 Gew.%, stärker bevorzugt 10-45 Gew.%. Der Medianwert der Partikelgröße D₅₀, bestimmt gemäß DIN ISO 9276-1:2004-09 und ISO 9276-2:2014-05, des Grobfüllstoffs (GFS) beträgt erfindungsgemäß 501-2000 µm, vorzugsweise 501-1500 µm, stärker bevorzugt 501-1200 µm. Die Fraktionsgrenzen (Kleinstkorn bis Größtkorn) des Grobfüllstoffs (GFS) betragen üblicherweise 300-2500 µm, vorzugsweise 400-1600 µm, stärker bevorzugt 500-1250 µm.

Als Mittelfüllstoff (MFS) werden erfindungsgemäß vorzugsweise silikatische und/oder karbonatische Füllstoffe, wie Quarz, Cristobalit, Kalkstein, Marmor und/oder Dolomit, eingesetzt. Bevorzugt werden als Mittelfüllstoff (MFS) CaCOs (Kalkstein, Marmor) und/oder Quarz. Der Mengenanteil des Mittelfüllstoffs (MFS) am erfindungsgemäßen Trockenmörtelgemisch beträgt typischerweise 5-60 Gew.%, vorzugsweise 7,5-50 Gew.%, stärker bevorzugt 10-45 Gew.%, bezogen auf das Gesamtgewicht des Trockenmörtelgemisches. Der Medianwert der Partikelgröße D₅₀, bestimmt gemäß DIN ISO 9276-1:2004-09 und ISO 9276-2:2014-05, des Mittelfüllstoffs (MFS) beträgt erfindungsgemäß 78-500 µm, vorzugsweise 100-500 µm, stärker bevorzugt 150-500 µm. Die Fraktionsgrenzen (Kleinstkorn bis Größtkorn) des Mittelfüllstoffs (MFS) betragen üblicherweise 50-800 µm, vorzugsweise 75-700 µm, stärker bevorzugt 100-500 µm.

Als Feinfüllstoff (FFS) werden erfindungsgemäß vorzugsweise silikatische, karbonatische, oxidische, hydroxidische und/oder sulfatische Füllstoffe eingesetzt. Illustrative Beispiele davon beinhalten Quarz, Cristobalit, Schichtsilikate, Talkum, Kaolin, Glimmer, Kalkstein, Marmor, Dolomit, Aluminiumhydroxid und/oder Bariumsulfate. Bevorzugt werden CaCOs (Kalkstein, Marmor) und/oder Quarz für den Feinfüllstoff (FFS) verwendet.

Der Mengenanteil des Feinfüllstoffs (FFS) am erfindungsgemäßen Trockenmörtelgemisch beträgt typischerweise 1-50 Gew.%, vorzugsweise 2-40 Gew.%, stärker bevorzugt 5-30 Gew.%, bezogen auf das Gesamtgewicht des Trockenmörtelgemisches. Der Medianwert der Partikelgröße D₅₀, bestimmt gemäß DIN ISO 9276-1 :2004-09 und ISO 9276-2:2014-05, des Feinfüllstoffs (FFS) beträgt erfindungsgemäß 10-77 µm, vorzugsweise 20-70 µm, stärker bevorzugt 25-60 µm. Die Fraktionsgrenzen (Kleinstkorn bis Größtkorn) des Feinfüllstoffs (FFS) betragen üblicherweise 1-150 µm, vorzugsweise 10-120 µm, stärker bevorzugt 15-100 µm.

Für die Bestimmung der vorangehend beschriebenen Kleinst- bzw. Größtkorngrößen kann der Fachmann auf die Normen DIN EN 13139, DIN EN 933-1 und DIN EN 933-10 zurückgreifen.

In einer bevorzugten Ausführungsform der Erfindung umfasst die mindestens trimodale Füllstoffkombination des Trockenmörtelgemisches Grobfüllstoff (GFS), Mittelfüllstoff (MFS) und Feinfüllstoff (FFS), wie vorstehend beschrieben, wobei das Trockenmörtelgemisch, jeweils bezogen auf die Gesamtmasse des Trockenmörtelgemisches, umfasst:
5,0-60 Gew.% an Grobfüllstoffen (GFS), und/oder, vorzugsweise und
5-60 Gew.% an Mittelfüllstoffen (MFS), und/oder, vorzugsweise und
1-50 Gew.% an Feinfüllstoffen (FFS).

In einer bevorzugten Ausführungsform der Erfindung umfasst die mindestens trimodale Füllstoffkombination des Trockenmörtelgemisches Grobfüllstoff (GFS), Mittelfüllstoff (MFS) und Feinfüllstoff (FFS), wie vorstehend beschrieben, wobei das Trockenmörtelgemisch, jeweils bezogen auf die Gesamtmasse des Trockenmörtelgemisches, umfasst:
7,5-50 Gew.% an Grobfüllstoffen (GFS), und/oder, vorzugsweise und
7,5-50 Gew.% an Mittelfüllstoffen (MFS), und/oder, vorzugsweise und
2-40 Gew.% an Feinfüllstoffen (FFS).

In einer weiter bevorzugten Ausführungsform der Erfindung umfasst die mindestens trimodale Füllstoffkombination des Trockenmörtelgemisches Grobfüllstoff (GFS), Mittelfüllstoff (MFS) und Feinfüllstoff (FFS), wie vorstehend beschrieben, wobei das Trockenmörtelgemisch, jeweils bezogen auf die Gesamtmasse des Trockenmörtelgemisches, umfasst:
10-45 Gew.% an Grobfüllstoffen (GFS), und/oder, vorzugsweise und
10-45 Gew.% an Mittelfüllstoffen (MFS), und/oder, vorzugsweise und
5-30 Gew.% an Feinfüllstoffen (FFS).

In einer bevorzugten Ausführungsform der Erfindung umfasst die mindestens trimodale Füllstoffkombination des Trockenmörtelgemisches Grobfüllstoff (GFS), Mittelfüllstoff (MFS) und Feinfüllstoff (FFS), wie vorstehend beschrieben, wobei Gewichtsverhältnis von GFS : MFS : FFS 1 : 1,5-2,5 : 2-4 beträgt. In einer weiter bevorzugten Ausführungsform umfasst die mindestens trimodale Füllstoffkombination Grobfüllstoff (GFS), Mittelfüllstoff (MFS) und Feinfüllstoff (FFS), wobei vorzugsweise das Gewichtsverhältnis GFS : MFS : FFS 1 : 1,75-2,25 : 2,25-3,75, wie etwa 1 : 2 : 3 beträgt.

In einer weiter bevorzugten Ausführungsform der Erfindung umfasst die mindestens trimodale Füllstoffkombination des Trockenmörtelgemisches Grobfüllstoff (GFS), Mittelfüllstoff (MFS) und Feinfüllstoff (FFS), wie vorstehend beschrieben, wobei Volumenverhältnis von GFS : MFS : FFS 1 : 1,5-2,5 : 2-4 beträgt. In einer ebenso bevorzugten Ausführungsform umfasst die mindestens trimodale Füllstoffkombination Grobfüllstoff (GFS), Mittelfüllstoff (MFS) und Feinfüllstoff (FFS), wobei das Volumenverhältnis GFS : MFS : FFS 1 : 1,75-2,25 : 2,25-3,75, wie etwa 1 : 2 : 3 beträgt.

In einer Ausführungsform beträgt das Gewichtsverhältnis des Gewichts an Grobfüllstoffen (GFS) zur Summe des Gewichtes an Mittelfüllstoffen (MFS) und Feinfüllstoffen (FFS) 1 : 0,8-7. In einer bevorzugten Ausführungsform beträgt das Gewichtsverhältnis des Gewichts an Grobfüllstoffen (GFS) zur Summe des Gewichtes an Mittelfüllstoffen (MFS) und Feinfüllstoffen (FFS) 1 : 0,9-6, vorzugsweise 1: 1,0-5.

Für alle Größenfraktionen gilt, dass nicht nur ein Füllstoff bzw. eine Füllstoffart eingesetzt werden kann, sondern auch eine Füllstoffmischung aus verschiedenen Füllstoffen.

### Kohlehaltiges Granulat (KG)

Eine Aufgabe der vorliegenden Erfindung ist die Bereitstellung eines Trockenmörtelgemisches zur Herstellung von feuchteabsorbierenden Beschichtungen, die gute oder verbesserte Feuchteabsorptionseigenschaften (Wasserdampf) haben, aber nicht den Nachteil einer zu intensiven Dunkelfärbung aufweisen. Ferner sollen die Beschichtungen eine möglichst geringe kapillare Wasseraufnahme zeigen. Eine möglichst niedrige kapillare Wasseraufnahme steht aber einer guten Wasserdampfabsorption entgegen.

Die gleichzeitige Verwirklichung zweier eigentlich entgegenstehender Ziele (hohen Wasserdampfsorption und geringe kapillare Wasseraufnahme) wird erfindungsgemäß erreicht bzw. unterstützt durch Zugabe eines kohlehaltigen Granulats (KG) in das erfindungsgemäße Trockenmörtelgemisch.

Gemäß der Erfindung wird kohlehaltiges Material in dem Trockenmörtelgemisch eingesetzt, um eine dynamische Feuchtespeicherung über die Wasserdampfsorptionseigenschaften zu erreichen. Wasser (gasförmig) wird von solch kohlehaltigen Oberflächen aufgenommen, gespeichert und auch wieder an die Umgebung abgegeben. Das Prinzip dieser dynamischen Feuchtesorption wird in der EP 2 559 676 beschrieben, wobei hier dort allerdings Sepiolithsand als funktioneller feuchtespeichernder Füllstoff eingesetzt wird.

Die Zugabe von bereits geringen Mengen eines kohlehaltigen Materials führt normalerweise zu einer starken Dunkelfärbung (Schwarzfärbung) der resultierenden Putze, welche unerwünscht ist. Die starke Färbung würde die Einsatzmöglichkeiten erheblich einschränken und den Einsatz des Trockenmörtels in allen Anwendungen, in denen die Farbe eine Rolle spielt, unmöglich machen. Ferner führt ein nahezu schwarzer Farbton bei einer entsprechenden Sonneneinstrahlung zu einer starken Aufheizung des Armierungsmörtels, was dazu führen kann, dass Spannungen auf Dämmplatten auftreten, die zu entsprechenden Verformungen führen können.

Die Erfinder der vorliegenden Erfindung haben gefunden, dass diese unerwünschte Schwarzfärbung nicht auftritt, wenn das kohlehaltige Material in Granulatform, d.h. erfindungsgemäß als kohlehaltiges Granulat (KG) verwendet wird. Durch die Granulatform müsste sich eigentlich die Absorption von Wasserdampf verringern, was den Zielen der vorliegenden Erfindung entgegenstünde. Die Erfinder der vorliegenden Erfindung haben jedoch gefunden, dass dieser unerwünschte Effekt nicht auftritt. Ohne an eine bestimmte Theorie gebunden sein zu wollen, wird vermutet, dass durch die Granulierung von kohlehaltigem Material innerhalb oder auf den Granulaten eine besondere feuchtespeichernde Oberfläche entsteht. Dadurch können mit den Trockenmörtelgemischen der vor liegenden Erfindung Beschichtungen erzielt werde, beispielsweise für den Einsatz im Außenbereich, die gleichzeitig eine hohe Wasserdampfsorption als auch eine niedrige kapillare Wasseraufnahme aufweisen.

Kohlehaltige Materialien, wie etwa Aktivkohle, Pflanzenkohle oder Pyrolysekohle, sind im Stand der Technik bekannt und werden häufig nach ihrem Verwendungszweck, Ausgangsstoffen oder Herstellungsverfahren bezeichnet. Die Einsatzgebiete von kohlehaltigen Materialien sind mannigfaltig: von der Reinigung von Flüssigkeiten und Gasen über Trägermaterial für Katalysatoren und Verwendung in medizinischen Produkten und Lebensmitteln bis hin in die Elektrotechnik. Auch Kohlefüllstoffe sind bekannt als funktionale Füllstoffe, werden hier jedoch funktionsbedingt üblicherweise in Pulverform eingesetzt.

Kohlehaltiges Material kann mit bekannten Granulationstechniken granuliert werden, gegebenenfalls unter Einsatz von üblichen Hilfs- und Bindemitteln. Kohlefüllstoffe sind sowohl in Pulver- als auch in Granulatform in großer Bandbreite kommerziell erhältlich.

Demgemäß enthält das Trockenmörtelgemisch der vorliegenden Erfindung weiterhin ein kohlehaltiges Granulat (KG) mit einem Medianwert der Partikelgröße D₅₀ von 501 µm bis 2000 µm. In einer Ausführungsform ist das kohlehaltige Granulat (KG) in einer Menge von 0,5-25 Gew.%, vorzugsweise 1,0-20 Gew.%, stärker bevorzugt 2,0-17,5 Gew.%, enthalten, jeweils basierend auf dem Gesamtgewicht des Trockenmörtelgemisches.

In einer Ausführungsform ist das kohlehaltige Granulat (KG) ausgewählt aus Aktivkohle, Pflanzenkohle oder Pyrolysekohle. In einer bevorzugten Ausführungsform ist das kohlehaltige Granulat (KG) ausgewählt aus Pflanzenkohle- oder Pyrolysekohle-Granulaten. Die Granulate können mit Einsatz von Hilfs- und Bindemittel hergestellt werden. In einer stärker bevorzugten Ausführungsform ist das kohlehaltige Granulat (KG) ein Pyrolysekohle-Granulat (PKG). Pyrolysekohle-Granulate und deren Herstellung werden beispielsweise in der DE 10 2022 002 721 beschrieben. Durch die Verwendung von Pflanzenkohle- oder Pyrolysekohle-Granulaten kann weiterhin die CO₂-Bilanz des erfindungsgemäßen Trockenmörtelgemisches verbessert werden, da die Pflanzen- oder Pyrolysekohle als "*CO₂-Senke*" wirkt.

In einer Ausführungsform weist das kohlehaltige Granulat (KG) eine Rohdichte von 700-1250 g/l auf. In einer bevorzugten Ausführungsform weist das kohlehaltige Granulat (KG) eine Rohdichte von 750-1200 g/l, vorzugsweise 800-1100 g/l auf. In einer Ausführungsform weist das kohlehaltige Granulat (KG) eine Schüttdichte von 400-800 g/l auf. In einer bevorzugten Ausführungsform weist das kohlehaltige Granulat (KG) eine Schüttdichte von 440-750 g/l, vorzugsweise 460-700 g/l auf. Die Bestimmung der Rohdichte erfolgt gemäß DIN EN 1936. Vorzugsweise wird die Schüttdichte nach DIN EN 1097-3 bestimmt.

Der Gehalt an Kohle des kohlehaltigen Granulats (KG), bezogen auf das Gesamtgewicht des kohlehaltigen Granulats (KG) beträgt in einer Ausführungsform 40 Gew.% oder mehr. In einer bevorzugten Ausführungsform beträgt der Gehalt an Kohle des kohlehaltigen Granulats (KG) 60 Gew.% oder mehr, vorzugsweise 80 Gew.% oder mehr. In einer Ausführungsform beträgt der Kohlenstoff-Gehalt des Kohleanteils des kohlehaltigen Granulats (KG), bezogen auf das Gesamtgewicht des Kohleanteils des kohlehaltigen Granulats (KG), 60 Gew.% oder mehr. In einer bevorzugten Ausführungsform beträgt der Kohlenstoff-Gehalt des Kohleanteils des kohlehaltigen Granulats (KG) 70 Gew.% oder mehr, vorzugsweise 80 Gew.% oder mehr.

Wie vorstehend ausgeführt weist das in dem erfindungsgemäßen Trockenmörtelgemisch enthaltene kohlehaltige Granulat (KG) einen Medianwert der Partikelgröße D₅₀ von 501 µm bis 2000 µm auf. In einer bevorzugten Ausführungsform beträgt der Medianwert der Partikelgröße D₅₀ des kohlehaltigen Granulats (KG) 501-1500 µm, vorzugsweise 501-1000 µm. Die Fraktionsgrenzen 300-2500 µm, vorzugsweise 400-1600 µm, stärker bevorzugt 500-1250 µm.

Die Zugabe des kohlehaltigen Granulats (KG) sorgt erfindungsgemäß nicht nur für eine hohe Wasserdampfsorption und gleichzeitig für eine geringe kapillare Wasseraufnahme. Im Zusammenspiel mit der vorstehend beschriebenen, mindestens trimodalen Füllstoffkombination bewirkt das kohlehaltige Granulat (KG) außerdem eine besondere *"innere Struktur*" der resultierenden Kleber und Putze (Poren, Kapillaren bzw. deren Abwesenheit, Größe und/oder Menge, etc.). Flüssiges Wasser kann nur schwer in die entsprechenden Oberflächen eindringen, Wasserdampf dagegen schon, wobei der Wasserdampf durch das kohlehaltige Granulat aufgenommen wird und wieder abgegeben werden kann. Dadurch kann erfindungsgemäß auch ein verbesserter Frost-Tausalzwiderstand verwirklicht werden.

In einer Ausführungsform beträgt das Gewichtsverhältnis der Summe des Gewichtes an Grobfüllstoffen (GFS) und kohlehaltigem Granulat (KG) zur Summe des Gewichtes an Mittelfüllstoffen (MFS) und Feinfüllstoffen (FFS) 1 : 0,75-6. In einer weiteren Ausführungsform beträgt das Gewichtsverhältnis der Summe des Gewichtes an Grobfüllstoffen (GFS) und kohlehaltigem Granulat (KG) zur Summe des Gewichtes an Mittelfüllstoffen (MFS) und Feinfüllstoffen (FFS) 1 : 0,8-5, vorzugsweise 1: 0,9-4.

### Mineralisches Bindemittel

Das Trockenmörtelgemisch der vorliegenden Erfindung umfasst ferner mindestens ein mineralisches Bindemittel. In einer Ausführungsform sind 5-40 Gew.% mineralisches Bindemittel, bezogen auf das Gesamtgewicht des Trockenmörtelgemisches, im erfindungsgemäßen Trockenmörtelgemisch vorhanden. In einer bevorzugten Ausführungsform enthalt das Trockenmörtelgemisch 7,5-35 Gew.%, vorzugsweise 10-32 Gew.% mineralisches Bindemittel.

Mineralisch Bindemittel im Sinne der vorliegenden Erfindung werden ausgewählt aus hydraulischen Bindemitteln, latent hydraulischen Bindemitteln oder Gemischen davon.

Als hydraulische Bindemittel werden zementöse Bindemittel, vorzugsweise ausgewählt aus Portlandzement, Aluminatzement oder Calciumsulfoaluminat-Zement (CSA). Als Calciumaluminatzement wird vorzugsweise kristalliner Calciumaluminatzement verwendet. Bei dem Portlandzement handelt es sich vorzugsweise um Portlandzement nach EN 197. In einer besonders bevorzugten Ausführungsform ist das hydraulische Bindemittel ein Portlandzement CEM I 52,5 R. Bei Verwendung von latent hydraulischen Bindemitteln werden in einer Ausführungsform auch Kalkhydrat und/oder Sulfatträger zugegeben.

Das latent hydraulische Bindemittel wird vorzugsweise ausgewählt aus Hüttensandmehl, Trassmehl, Ziegelmehl, Flugasche, Mikrosilika, Silikatstaub, Ölschiefer oder Metakaolin, sowie Mischungen und Kombinationen hiervon. In einer bevorzugten Ausführungsform ist das latent hydraulische Bindemittel Hüttensandmehl.

In einer Ausführungsform umfasst das Trockenmörtelgemisch, jeweils bezogen auf die Gesamtmasse des Trockenmörtelgemisches:
5-40 Gew.% des vorstehend beschriebenen mineralischen Bindemittels,
20-85 Gew.% der vorstehend beschriebenen Füllstoffkombination aus Grobfüllstoff (GFS), Mittelfüllstoff (MFS) und Feinfüllstoff (FFS), und
0,5-25 Gew.% des vorstehend beschriebenen kohlehaltigen Granulats (KG).

In einer weiteren Ausführungsform umfasst das Trockenmörtelgemisch, jeweils bezogen auf die Gesamtmasse des Trockenmörtelgemisches:
7,5-35 Gew.% des vorstehend beschriebenen mineralischen Bindemittels,
25-80 Gew.% der vorstehend beschriebenen Füllstoffkombination aus Grobfüllstoff (GFS), Mittelfüllstoff (MFS) und Feinfüllstoff (FFS), und
1,0-20 Gew.% des vorstehend beschriebenen kohlehaltigen Granulats (KG).

In einer weiteren Ausführungsform umfasst das Trockenmörtelgemisch, jeweils bezogen auf die Gesamtmasse des Trockenmörtelgemisches:
10-32 Gew.% des vorstehend beschriebenen mineralischen Bindemittels,
30-75 Gew.% der vorstehend beschriebenen Füllstoffkombination aus Grobfüllstoff (GFS), Mittelfüllstoff (MFS) und Feinfüllstoff (FFS), und
2,0-17,5 Gew.% des vorstehend beschriebenen kohlehaltigen Granulats (KG).

### Optionale Bestandteile

Das Trockenmörtelgemisch der vorliegenden Erfindung kann neben dem mineralischen Bindemittel, der mindestens trimodalen Füllstoffkombination und dem kohlehaltigen Granulat (KG), wie vorstehend beschrieben, gegebenenfalls auch weitere, optionale Bestandteile enthalten. Diese optionalen Bestandteile beinhalten, sind aber nicht beschränkt auf, beispielsweise Kalkhydrat, Sulfatträger, Redispersionspulver oder übliche Additive, wie etwa Netz-/Dispergiermittel, Fließ(hilfs)mittel, Hydrophobierungsmittel, Beschleuniger, Verzögerer, Porenbildner, Entschäumer, Entstaubungsmittel, Wasserretentionsmittel, Fasern, Flammschutzmittel, Pigmente, Rheologiemittel, Verdicker und Thixotropiermittel.

In einer Ausführungsform enthält das Trockenmörtelgemisch bis zu 20 Gew.% an Kalkhydrat und/oder Sulfatträger. Insbesondere bei Verwendung der vorstehend beschriebenen latent hydraulischen Bindemittel wird die zusätzliche Verwendung von Kalkhydrat und/oder Sulfatträger bevorzugt.

Des Weiteren kann das erfindungsgemäße Trockenmörtelgemisch Redispersionspulver enthalten. In einer Ausführungsform enthält das Trockenmörtelgemisch bis zu 12 Gew.%, bezogen auf das Gesamtgewicht des Trockenmörtelgemisches, an Redispersionspulver, wie etwa 0,5-12 Gew.% an Redispersionspulver, vorzugsweise 0,75-10 Gew.% an Redispersionspulver, stärker bevorzugt 1,0-8 Gew.% an Redispersionspulver. Geeignete Redispersionspulver umfassen, sind aber nicht beschränkt auf, beispielsweise Polymerpulver auf Basis von Vinylacetat/Ethylen-Copolymeren, Copolymeren auf Basis von Vinylaromaten, insbesondere Styrol, und Acrylaten und/oder Homo-, Co- oder Terpolymeren auf Basis von Reinacrylaten, insbesondere auf Basis von Styrolacrylatcopolymeren, und/oder Reinacrylate, umfassend Homo- oder Copolymere von Acrylaten und/oder Methacrylaten, gegebenenfalls mit Acryl- und/oder Methacrylsäure als Comonomerbaustein. Bevorzugt als Redispersionspulver werden Homo- oder Copolymere auf Basis von Reinacrylaten und/oder auf Basis von Styrolacrylatcopolymeren.

Das erfindungsgemäße Trockenmörtelgemisch kann ferner weitere Additive, wie Netz-/Dispergiermittel, Fließ(hilfs)mittel, Hydrophobierungsmittel, Beschleuniger, Verzögerer, Porenbildner, Entschäumer, Entstaubungsmittel, Wasserretentionsmittel, Fasern, Flammschutzmittel, Pigmente, Rheologiemittel, Verdicker und Thixotropiermittel, enthalten. In einer Ausführungsform beträgt die Menge dieser weiteren Additive bis zu 12 Gew.%, bezogen auf das Gesamtgewicht des Trockenmörtelgemisches, wie etwa 0,1-5,0 Gew.-%.

### Verwendung

Das erfindungsgemäße Trockenmörtelgemisch kann zur Ausbildung einer Kleber- oder Putzschicht auf einem Bauelement oder einem bauseitigen Untergrund verwendet werden. Durch Zugabe von Wasser und/oder einem anderen Lösungsmittel kann Trockenmörtelgemisch zu einer pastösen Masse verarbeitet, dann auf einem Bauelement oder einem bauseitigen Untergrund aufgetragen und trocknen bzw. aushärten gelassen werden.

Demgemäß betrifft die vorliegende Erfindung auch die Verwendung des hierin beschriebenen Trockenmörtelgemisches in Putzen, Klebe- und Armierungsmörteln, Fliesenklebern, Fugenmörteln, Betoninstandsetzungsprodukten oder Bodenbeschichtungen.

### Beispiele

Anhand konkreter Ausführungsbeispiele werden nachfolgend die Vorteile der Erfindung aufgezeigt. Die Ausführungsbeispiele geben erfindungsgemäße Trockenmörtelgemische zur Ausbildung einer ein- oder mehrlagigen Putz- oder Kleberschicht, wie beispielsweise einer ein- oder mehrlagigen Armierungsschicht an.

### Ausführungsbeispiel A1: Feuchtesorptionsputz

Es wurde ein Trockenmörtelgemisch mit den Bestandteilen und Gewichtsanteilen gemäß folgender Tabelle 1 hergestellt. Durch die Zugabe von Wasser wird aus dem Trockenmörtelgemisch eine pastöse Masse, die dann weiter verarbeitbar ist.

**Tabelle 1:**

| **Bestandteil** | **Menge in [Gew.-%]** |
|---|---|
| Portlandzement | 16,0 |
| Quarz (GFS, D₅₀ ca. 870 µm) | 9,0 |
| Quarz (GFS, D₅₀ ca. 600 µm) | 22,0 |
| Quarz (MFS, D₅₀ ca. 260 µm) | 16,0 |
| Calciumcarbonat (FFS, D₅₀ ca. 45 µm) | 20,0 |
| Kohlehaltiges Granulat (KG, D₅₀ ca. 720 µm) | 10,0 |
| Weißkalkhydrat | 4,0 |
| Redispersionspulver | 1,5 |
| Weitere Additive (u.a. Fasern, Rheologie- / Thixotropiemittel, etc.) | 1,5 |

Zur Herstellung eines erfindungsgemäßen Trockenmörtelgemisches wurden alle Ausgangsstoffe homogen gemischt und durch Zugabe von Wasser eine pastöse Putzmasse hergestellt. Die Putzmasse wurde anschließend in einer Schichtstärke von 2,0 mm auf eine Platte aus expandiertem Polystyrol aufgebracht und in einem Konstantklimaraum bei einer Umgebungstemperatur von 23°C und einer relativen Feuchte von 50% bis zur Gewichtskonstanz getrocknet. Die Trocknung bzw. das Verdunsten von Wasser wurde gravimetrisch verfolgt. Die Putzmasse gilt als getrocknet, wenn bis zum Erreichen der Gewichtskonstanz der 98%-Wert überschritten wurde.

### Referenzbeispiel R1:

Referenzbeispiel R1 wurde analog dem Ausführungsbeispiel A1 durchgeführt, außer dass das kohlehaltige Granulat (KG) ausgetauscht wurde gegen die gleiche Menge an Kohlepulver mit einen Medianwert der Partikelgröße D₅₀ von ca. 65 µm.

### Ausführungsbeispiel A2: Klebe- und Armierungsmörtel

Es wurde ein Trockenmörtelgemisch mit den Bestandteilen und Gewichtsanteilen gemäß folgender Tabelle 2 hergestellt.

**Tabelle 2:**

| **Bestandteil** | **Menge in [Gew.-%]** |
|---|---|
| Portlandzement | 17,0 |
| Quarz (GFS, D₅₀ ca. 850 µm) | 10,0 |
| Quarz (GFS, D₅₀ ca. 560 µm) | 5,0 |
| Quarz (MFS, D₅₀ ca. 260 µm) | 30,0 |
| Blähglas (MFS, D₅₀ ca. 350 µm) | 3,0 |
| Calciumcarbonat (FFS, D₅₀ ca. 45 µm) | 25,0 |
| Kohlehaltiges Granulat (KG, D₅₀ ca. 720 µm) | 4,0 |
| Weißkalkhydrat | 2,0 |
| Redispersionspulver | 2,5 |
| Hydrophobierungsmittel | 0,3 |
| Weitere Additive (u.a. Fasern, Thixotropiemittel, etc.) | 1,2 |

Das erfindungsgemäße Trockenmörtelgemisches wurde durch Zugabe von Wasser zu einer pastösen Mörtelmasse angemacht, aus der dann Probenkörper hergestellt wurden, an denen die kapillare Wasseraufnahme gemäß DIN EN 1015-18 bestimmt wurde.

### Referenzbeispiel R2a

Referenzbeispiel R2a wurde analog dem Ausführungsbeispiel A2 durchgeführt, außer dass das kohlehaltige Granulat (KG) ausgetauscht wurde gegen die gleiche Menge an Kohlepulver mit einen Medianwert der Partikelgröße D₅₀ von ca. 65 µm.

### Referenzbeispiel R2b

Referenzbeispiel R2b wurde analog dem Ausführungsbeispiel A2 durchgeführt, außer dass das kohlehaltige Granulat (KG) ersetzt wurde durch weitere 4,0 Gew.% an Quarz-Füllstoff (GFS).

### Ergebnisse:

Die erhaltenen Ergebnisse sind in der folgenden Tabelle 3 dargestellt.

**Tabelle 3:**

| | **A1** | **R1** | **A2** | **R2a** | **R2b** |
|---|---|---|---|---|---|
| L-Wert (Helligkeit) | 77,2 | 46,8 | - | - | - |
| Flächenspezifische Feuchteaufnahme [g/m²] | 94-101 | 78-84 | - | - | - |
| Kapillare Wasseraufnahme [kg/(m²*min^{0,5})] | - | - | 0,42-0,46 | 0,68-0,70 | 0,71-0,72 |

Der L-Wert gibt die *_{"}Helligkeit"* der erhaltenen Beschichtung an und wurde gemäß DIN 5033-1:2009-05 bestimmt.

Die Feuchtesorptionseigenschaften (flächenspezifische Feuchteaufnahme) wurden im sogenannten Nordtest ermittelt. In einem Nordtest wird in einer Testkammer bei einer konstanten Temperatur von 23°C ein Feuchteprofil über die Zeit vorgegeben, wobei für eine Zeitdauer von 16 Stunden eine relative Feuchte von 33% und daran anschließend für eine Zeitdauer von 8 Stunden eine relative Feuchte von 75% angelegt wird. Danach wird der Zyklus mehrfach wiederholt. Mit diesen Vorgaben wird eine sich im Tagesverlauf ändernde Feuchte simuliert. Die in Tabelle 3 angegeben Werte zur flächenspezifischen Feuchteaufnahme wurden nach einer 8 stündigen Feuchtigkeitsphase gemessen.

Die kapillare Wasseraufnahme wurde gemäß DIN EN 1015-18 an aus der pastösen Mörtelmasse hergestellten Probenkörpern bestimmt.

Die aus Referenzbeispiel R1 erhaltene Oberflächenbeschichtung ist erheblich dunkler und viel grauer als die aus Ausführungsbeispiel A1 erhaltene Beschichtung. Schon deshalb ist ein Einsatz im Innenbereich als Oberputz, der neben der gewünschten Feuchtesorption auch dekorative Aufgaben erfüllen muss, schon stark eingeschränkt. Ferner wird durch Verwendung von kohlehaltigem Granulat (KG) anstelle von herkömmlichem Kohlepulver die flächenspezifische Feuchteaufnahme verbessert (Ausführungsbeispiel A1). Überraschenderweise wird im Gegensatz dazu durch Verwendung von Kohle in Granulatform (KG) anstelle von herkömmlichem Kohlepulver bzw. anstelle der Abwesenheit von kohlehaltigem Granulat (KG) die kapillare Wasseraufnahme erheblich reduziert (Ausführungsbeispiel A2).

## Patentansprüche

1. Trockenmörtelgemisch, umfassend:
mindestens ein mineralisches Bindemittel, und
eine Füllstoffkombination mit einer mindestens trimodalen Partikelgrößenverteilung, umfassend
mindestens einen Grobfüllstoff (GFS) mit einen Medianwert der Partikelgröße D₅₀, bestimmt gemäß DIN ISO 9276-1:2004-09 und ISO 9276-2:2014-05, von 501 µm bis 2000 µm,
mindestens einen Mittelfüllstoff (MFS) mit einen Medianwert der Partikelgröße D₅₀ von 78 µm bis 500 µm, und
mindestens einen Feinfüllstoff (FFS) mit einen Medianwert der Partikelgröße D₅₀ von 10 µm bis 77 µm, und
wobei das Trockenmörtelgemisch weiterhin kohlehaltiges Granulat (KG) mit einen Medianwert der Partikelgröße D₅₀ von 501 µm bis 2000 µm umfasst.

2. Trockenmörtelgemisch gemäß Anspruch 1, wobei das Trockenmörtelgemisch, jeweils bezogen auf die Gesamtmasse des Trockenmörtelgemisches, umfasst:
5-40 Gew.% mineralisches Bindemittel, *vorzugsweise* 7,5-35 Gew.%, *stärker bevorzugt* 10-32 Gew.% mineralisches Bindemittel,
20-85 Gew.% der Füllstoffkombination aus Grobfüllstoff (GFS), Mittelfüllstoff (MFS) und Feinfüllstoff (FFS), *vorzugsweise* 25-80 Gew.%, *stärker bevorzugt* 30-75 Gew.% der Füllstoffkombination aus Grobfüllstoff (GFS), Mittelfüllstoff (MFS) und Feinfüllstoff (FFS), und
0,5-25 Gew.% kohlehaltiges Granulat (KG), *vorzugsweise* 1,0-20 Gew.%, *stärker bevorzugt 2*,0-17,5 Gew.% kohlehaltiges Granulat (KG).

3. Trockenmörtelgemisch gemäß Anspruch 2, wobei Gewichtsverhältnis von GFS : MFS : FFS 1 : 1,5-2,5 : 2-4 beträgt, und wobei *vorzugsweise* das Gewichtsverhältnis GFS : MFS : FFS 1 : 1,75-2,25 : 2,25-3,75, *stärker bevorzugt* etwa 1 : 2 : 3 beträgt.

4. Trockenmörtelgemisch gemäß Anspruch 2 oder 3, wobei Volumenverhältnis von GFS : MFS : FFS 1 : 1,5-2,5 : 2-4 beträgt, und wobei *vorzugsweise* das Volumenverhältnis GFS : MFS : FFS 1 : 1,75-2,25 : 2,25-3,75, *stärker bevorzugt* etwa 1 : 2 : 3 beträgt.

5. Trockenmörtelgemisch gemäß einem der Ansprüche 1-4, wobei der Medianwert der Partikelgröße D₅₀ des Mittelfüllstoffs (MFS) 0,155 bis 0,414 des Medianwerts der Partikelgröße D₅₀ des Grobfüllstoffs (GFS) beträgt, und wobei *vorzugsweise* der Medianwert der Partikelgröße D₅₀ des Mittelfüllstoffs (MFS) 0,225 bis 0,414, *stärker bevorzugt* 0,225 bis 0,291 des Medianwerts der Partikelgröße D₅₀ des Grobfüllstoffs (GFS) beträgt.

6. Trockenmörtelgemisch gemäß einem der Ansprüche 1-5, wobei der Medianwert der Partikelgröße D₅₀ des Feinfüllstoffs (FFS) 0,5 oder weniger des Medianwerts der Partikelgröße D₅₀ des Mittelfüllstoffs (MFS) beträgt, und wobei *vorzugsweise* der Medianwert der Partikelgröße D₅₀ des Feinfüllstoffs (FFS) 0,33 oder weniger, *stärker bevorzugt* 0,25 oder weniger des Medianwerts der Partikelgröße D₅₀ des Mittelfüllstoffs (MFS) beträgt.

7. Trockenmörtelgemisch gemäß einem der Ansprüche 1-6, wobei das Größenverhältnis der Medianwerte der Partikelgrößen D₅₀ des Feinfüllstoffs (FFS), des Mittelfüllstoffs (MFS) und des Grobfüllstoffs (GFS) 1 : 3-10 : 15-40 beträgt.

8. Trockenmörtelgemisch gemäß einem der Ansprüche 1-7, wobei das Trockenmörtelgemisch, jeweils bezogen auf die Gesamtmasse des Trockenmörtelgemisches, umfasst:
5,0-60 Gew.% an Grobfüllstoffen (GFS), *vorzugsweise* 7,5-50 Gew.%, *stärker bevorzugt* 10-45 Gew.% an Grobfüllstoffen (GFS), und/oder
5-60 Gew.% an Mittelfüllstoffen (MFS), *vorzugsweise* 7,5-50 Gew.%, *stärker bevorzugt* 10-45 Gew.% an Mittelfüllstoffen (MFS), und/oder
1-50 Gew.% an Feinfüllstoffen (FFS), *vorzugsweise* 2-40 Gew.%, *stärker bevorzugt* 5-30 Gew.% Feinfüllstoffen (FFS).

9. Trockenmörtelgemisch gemäß einem der Ansprüche 1-8, wobei das Gewichtsverhältnis des Gewichts an Grobfüllstoffen (GFS) zur Summe des Gewichtes an Mittelfüllstoffen (MFS) und Feinfüllstoffen (FFS) 1 : 0,8-7, *vorzugsweise* 1 : 0,9-6, *stärker bevorzugt* 1: 1,0-5 beträgt, und/oder
wobei das Gewichtsverhältnis der Summe des Gewichtes an Grobfüllstoffen (GFS) und kohlehaltigem Granulat (KG) zur Summe des Gewichtes an Mittelfüllstoffen (MFS) und Feinfüllstoffen (FFS) 1 : 0,75-6, *vorzugsweise* 1 : 0,8-5, *stärker bevorzugt* 1: 0,9-4 beträgt

10. Trockenmörtelgemisch gemäß einem der Ansprüche 1-9, wobei das Trockenmörtelgemisch, jeweils bezogen auf die Gesamtmasse des Trockenmörtelgemisches, weiterhin umfasst:
gegebenenfalls 0-20 Gew.% an Kalkhydrat, und/oder
0,1-5,0 Gew.% an Additiven, und/oder
0,5-12 Gew.% an Redispersionspulver, *vorzugsweise* 0,75-10 Gew.%, *stärker bevorzugt* 1,0-8 Gew.% Redispersionspulver.

11. Trockenmörtelgemisch gemäß einem der Ansprüche 1-10, wobei
der Grobfüllstoff (GFS) ausgewählt ist aus silikatischen und/oder carbonatischen Füllstoffen, wie etwa Quarz, Cristobalit, Kalkstein, Marmor und/oder Dolomit,
der Mittelfüllstoff (MFS) ausgewählt ist aus carbonatischen und/oder silikatischen Füllstoffen, wie etwa etwa Quarz, Cristobalit, Kalkstein, Marmor und/oder Dolomit, und/oder
der Feinfüllstoff (FFS) ausgewählt ist aus carbonatischen, silikatischen, oxidischen, hydroxidischen und/oder sulfatische Füllstoffen, wie etwa Kalkstein, Marmor, Dolomit, Quarz, Cristobalit, Schichtsilikate, Talkum, Kaolin, Glimmer und/oder Aluminiumhydroxid.

12. Trockenmörtelgemisch gemäß einem der Ansprüche 1-11, wobei das kohlehaltige Granulat (KG) eine Rohdichte von 700-1250 g/l aufweist, *vorzugsweise* 750-1200 g/l, *stärker bevorzugt* 800-110 g/l aufweist, und/oder
wobei das kohlehaltige Granulat (KG) eine Schüttdichte von 400-800 g/l, *vorzugsweise* 440-750 g/l, *stärker bevorzugt* 460-700 g/l aufweist.

13. Trockenmörtelgemisch gemäß einem der Ansprüche 1-12, wobei das kohlehaltige Granulat (KG) ausgewählt ist aus Aktivkohle, Pflanzenkohle oder Pyrolysekohle, *vorzugsweise* ausgewählt ist aus Pflanzenkohle- oder Pyrolysekohle-Granulaten, und/oder
wobei der Gehalt an Kohle des kohlehaltigen Granulats (KG), bezogen auf das Gesamtgewicht des kohlehaltigen Granulats (KG), 40 Gew.% oder mehr, *vorzugsweise* 60 Gew.% oder mehr, *stärker bevorzugt* 80 Gew.% oder mehr beträgt und/oder
wobei der Kohlenstoff-Gehalt des Kohleanteils des kohlehaltigen Granulats (KG), bezogen auf das Gesamtgewicht des Kohleanteils des kohlehaltigen Granulats (KG), 60 Gew.% oder mehr, *vorzugsweise* 70 Gew.% oder mehr, *stärker bevorzugt* 80 Gew.% oder mehr beträgt, und/oder
wobei der Medianwert der Partikelgröße D₅₀ des kohlehaltigen Granulats (KG) 501-1500 µm, *vorzugsweise* 501-1000 µm beträgt.

14. Trockenmörtelgemisch gemäß einem der Ansprüche 1-13, wobei das kohlehaltige Granulat (KG) ein Pyrolysekohle-Granulat (PKG) ist

15. Trockenmörtelgemisch gemäß einem der Ansprüche 1-14, wobei das mineralische Bindemittel ausgewählt ist aus hydraulischen Bindemittel, latent hydraulischen Bindemittel oder Gemischen davon, und
wobei das hydraulische Bindemittel *vorzugsweise* ausgewählt ist aus Portlandzement, Aluminatzement oder Calciumsulfoaluminat-Zement (CSA), und/oder
wobei das latent hydraulische Bindemittel *vorzugsweise* ausgewählt ist aus Hüttensandmehl, Trassmehl, Ziegelmehl, Flugasche, Mikrosilika, Silikatstaub, Ölschiefer oder Metakaolin, sowie Mischungen und Kombinationen hiervon, *stärker bevorzugt* Hüttensandmehl.

16. Verwendung des Trockenmörtelgemisches nach einem der Ansprüche 1-15 in Putzen, Klebe- und Armierungsmörteln, Fliesenklebern, Fugenmörteln, Betoninstandsetzungsprodukten oder Bodenbeschichtungen.
